# EUROPÄISCHE PATENTSCHRIFT

(11) **EP 2 419 256 B1**
(45) Veröffentlichungstag und Bekanntmachung des Hinweises auf die Patenterteilung: **18.09.2013**
(21) Anmeldenummer: 10717506.9
(22) Anmeldetag: 29.03.2010
(51) Int. Cl.: B29C 49/42, B29C 49/78, B29C 49/06, B29C 49/12, B29C 49/64

(54) **VERFAHREN UND VORRICHTUNG ZUR BLASFORMUNG VON BEHÄLTERN**
METHOD AND DEVICE FOR BLOW-MOLDING CONTAINERS
PROCÉDÉ ET DISPOSITIF DE MOULAGE PAR SOUFFLAGE DE CONTENANTS

(30) Priorität: 16.04.2009 DE 102009019008
(43) Veröffentlichungstag der Anmeldung: 22.02.2012
(73) Patentinhaber: KHS Corpoplast GmbH, 22145 Hamburg (DE)
(72) Erfinder: BAUMGARTE, Rolf, 22926 Ahrensburg (DE); LEWIN, Frank, 22889 Tangstedt (DE); LITZENBERG, Michael, 21502 Geesthacht (DE); LINKE, Michael, 22047 Hamburg (DE)
(74) Vertreter: Hausfeld, Norbert
(86) Internationale Anmeldenummer: PCT/DE2010/000389
(87) Internationale Veröffentlichungsnummer: WO 2010/118728

(56) Entgegenhaltungen:
- EP-A1- 0 754 537
- EP-A1- 0 824 978
- WO-A1-96/25285
- WO-A2-2007/017429
- FR-A1- 2 781 716

## Beschreibung

Die Erfindung betrifft ein Verfahren zur Blasformung von Behältern, bei dem ein Vorformling nach einer thermischen Konditionierung innerhalb einer Blasform einer Blasmaschine durch Blasdruckeinwirkung in den Behälter umgeformt wird sowie bei dem ein Blasgas von einer Versorgungseinrichtung bereitgestellt wird.

Die Erfindung betrifft darüber hinaus eine Vorrichtung zur Blasformung von Behältern, die mindestens eine Blasstation mit einer Blasform aufweist, sowie bei der die Blasstation mit einer pneumatischen Versorgungseinrichtung verbunden ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Eine Versorgung der Blasstation mit Blasgas, insbesondere mit Druckluft, erfolgt in der Regel über einen oder mehrere Kompressoren. Typischerweise ist der verwendete Kompressor mit einer Kompressorsteuerung versehen und zwischen dem Kompressor und der Blasmaschine ist ein Druckluftspeicher installiert. Die Kompressorsteuerung steuert den Kompressor derart, dass ein vorgegebenes Druckniveau im Bereich des Druckluftspeichers eingehalten wird. Typischerweise ist die Kompressorsteuerung derart eingestellt, dass im Bereich des Druckluftspeichers ein Druckniveau von etwa 38 bar bereitgestellt wird. Die Blasmaschine ist mit einer Drucksteuereinrichtung versehen, die den vom Druckluftspeicher bereitgestellten Druck auf ein konkret zur Formung des Behälters benötigtes Druckniveau reduziert.

Aus der FR 2781716 A1 ist es bereits bekannt, verbrauchte Blasluft unter Nutzung einer Kolben-Zylinder-Anordnung für den nachfolgenden Blasvorgang zu nutzen. Die für einen nachfolgenden Blasschritt erforderliche Blasluft wird zumindest teilkomprimiert durch verbrauchte Blasluft bereitgestellt.

Die Nutzung verbrauchter Blasluft durch eine Kolben-Zylinder-Anordnung wird ebenfalls bereits in der WO 96/25285 A1 beschrieben. Auch hier wird zumindest ein Teil der Druckenergie der verbrauchten Blasluft erneut genutzt.

Ein wesentlicher Anteil der laufenden Betriebskosten für die blastechnische Herstellung der Behälter resultiert aus der Bereitstellung der erforderlichen Blasluft. Zur Reduzierung dieser Kosten ist es beispielsweise bekannt, die verwendete Blasluft mehrfach zu verwenden und verbrauchte Blasluft eines hohen Druckniveaus auf einem niedrigeren Druckniveau erneut der Behälterformung zuzuführen. Da ein derartiges Recycling von Blasluft nicht in jedem Fall umfangreich einsetzbar ist, können allein durch die Realisierung eines derartigen Recycling die Anforderungen an eine deutliche Reduzierung der Betriebskosten noch nicht in völlig zufriedenstellender Weise erfüllt werden.

Auch bei den bereits bekannten Verfahren zum Blasluftrecycling wird der überwiegende Anteil der in den Behältern enthaltenen komprimierten Druckluft in die Atmosphäre abgeleitet. Bei einer Rückführung von verwendeter Blasluft ausgehend von einem rotierenden Blasluft zurück in einen stationären Hallenteil treten erhebliche Leitungslängen auf und es wird ein komplexes pneumatisches System generiert.

Aufgabe der vorliegenden Erfindung ist es daher, ein Verfahren der einleitend genannten Art derart zu verbessern, dass eine Reduzierung der Betriebskosten unterstützt wird.

Diese Aufgabe wird mit den Merkmalen der Ansprüche 1 und 9 gelöst.

Weitere Aufgabe der vorliegenden Erfindung ist es, eine Vorrichtung der einleitend genannten Art derart zu konstruieren, dass verringerte Betriebskosten erreicht werden.

Diese Aufgabe wird erfindungsgemäß dadurch gelöst, dass die Blasstation derart mit einer Transformationseinrichtung gekoppelt ist, dass mindestens ein Teil der innerhalb des geblasenen Behälters gespeicherten pneumatischen Druckenergie in eine andere Energieform transformierbar ist, dass die Blasstation derart mit einer Transformationseinrichtung gekoppelt ist, dass mindestens ein Teil der innerhalb des geblasenen Behälters gespeicherten pneumatischen Druckenergie in eine andere Energieform transformierbar ist, wobei die Transformationseinrichtung zur Erzeugung mechanischer Antriebsenergie für ein Blasrad ausgebildet ist.

Durch die Umwandlung der pneumatischen Energie in eine zur pneumatischen Energie unterschiedliche Energieform ist es möglich, einen wesentlichen Teil der in der verbrauchten Blasluft enthaltenen Energie zurück zu gewinnen. Bei den bekannten Varianten zur direkten pneumatischen Wiederverwendung der Druckluft besteht das wesentliche Problem darin, dass es nicht möglich ist, das ursprüngliche Druckniveau wieder zu erreichen. Die verbrauchte Blasluft kann deshalb nur in einem Arbeitsluftbereich oder als Vordruck bei der Durchführung des Blasvorganges verwendet werden. Der wesentliche Energieanteil bleibt jedoch ungenutzt. Die Transformation der Druckenergie in eine andere Energieform ermöglicht es, unter Verwendung dieser Energie eine erneute Gaskompression auf grundsätzlich jedes beliebige vorgebbare Druckniveau vornehmen zu können und insbesondere hierdurch wieder den erforderlichen Hauptblasdruck bereitzustellen.

Insbesondere ist daran gedacht, sowohl die Transformation der Druckenergie in die andere Energieform als auch die erneute Blasdruckgenerierung im Bereich der Blasmaschine selbst durchzuführen. Es wird hierdurch eine sehr kompakte und übersichtliche Anlage bereitgestellt, ohne dass ein Betreiber sich um komplexe und räumlich verteilte Anlagenkomponenten kümmern müsste.

Eine kompakte Ausführungsform wird dadurch unterstützt, daß eine Umwandlung der Druckenergie in mechanische Antriebsenergie für ein Blasrad der Blasmaschine durchgeführt wird.

Ein vergrößerter Gestaltungsspielraum bei der Systemrealisierung wird dadurch bereitgestellt, daß die Druckenergie in elektrische Energie transformiert wird.

Eine mechanisch stabile Ausführungsform wird dadurch erreicht, daß die Druckenergie unter Verwendung mindestens einer Kolben-Zylinder-Anordnung transformiert wird.

Zur Ermöglichung eines weitgehenden Kraftausgleiches bei den Kompressions- und Dekompressionsvorgängen wird vorgeschlagen, daß auf dem Blasrad mindestens zwei Blasstationen angeordnet werden.

Eine einfache Energietransformation wird dadurch unterstützt, daß die Druckenergie durch einen Kontakt zwischen einer Kurvenrolle und einer Kurvenbahn in mechanische Antriebsenergie transformiert wird.

Zur Kraftaufnahme erweist es sich als vorteilhaft, daß die Kurvenrolle mit dem Blasrad rotiert und die Kurvenbahn ortsfest angeordnet wird.

Ein kontinuierlicher Betrieb mit konstanten Betriebsparametern wird dadurch unterstützt, daß ein Teil der Antriebsenergie des Blasrades unter Verwendung mindestens einer Kolben-Zylinder-Anordnung in pneumatische Druckenergie transformiert wird, die einem Vorratstank zugeführt wird.

Exakt reproduzierbare Prozeßabläufe werden dadurch erreicht, daß mindestens ein Teil der Energieumwandlung kurvengesteuert durchgeführt wird.

Die Einhaltung vorgegebener Druckpegel wird dadurch unterstützt, daß eine vorgebbare Gasströmungsrichtung durch mindestens ein Rückschlagventil vorgegeben wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung zur Energietransformation sowie zur Blasdruckgenerierung im Bereich der Blasmaschine und
- Fig. 6: eine schematische veranschaulichung des Blasdruckverlaufes und des Druckverlaufes im Bereich einer zylinderartigen Transformationseinrichtung.

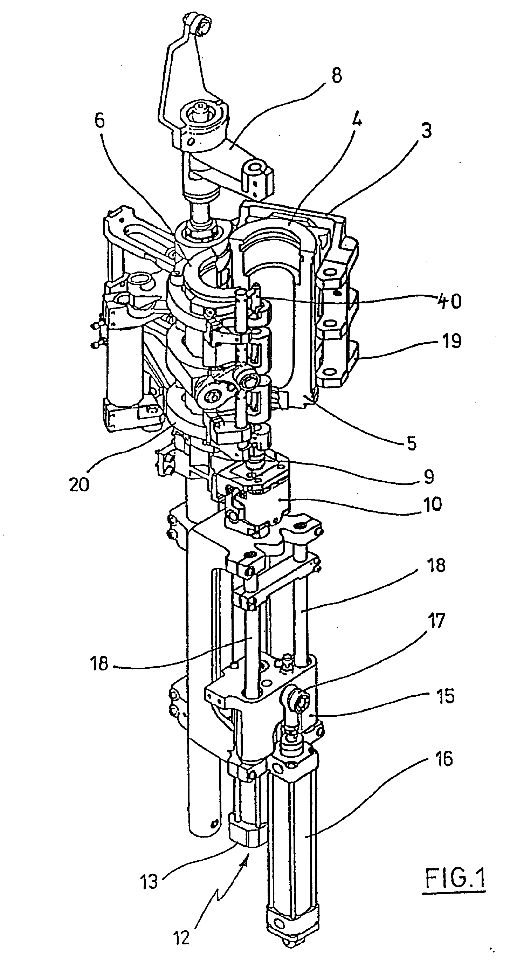

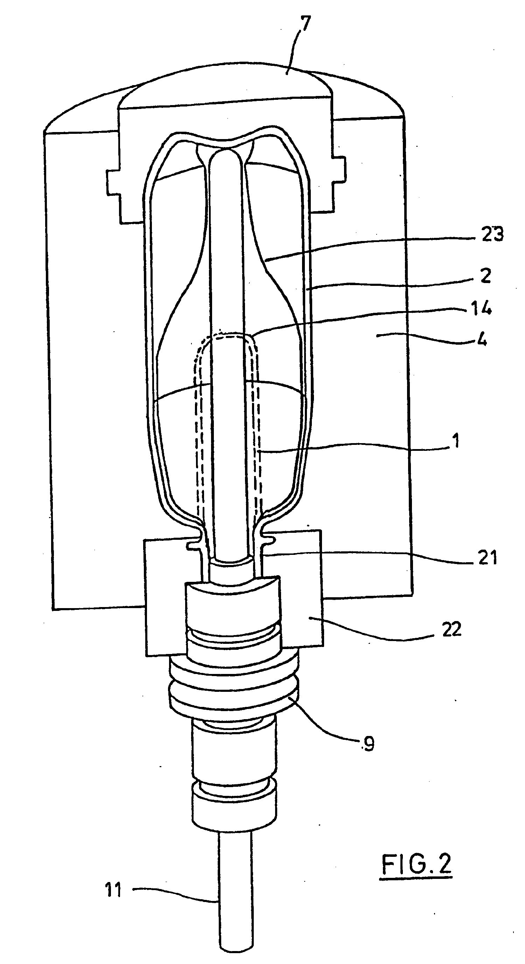

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der vorformling (1) kann im Bereich der Blasstation (3) von einem Transportdorn (9) gehalten sein, der gemeinsam mit dem vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durch-führung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

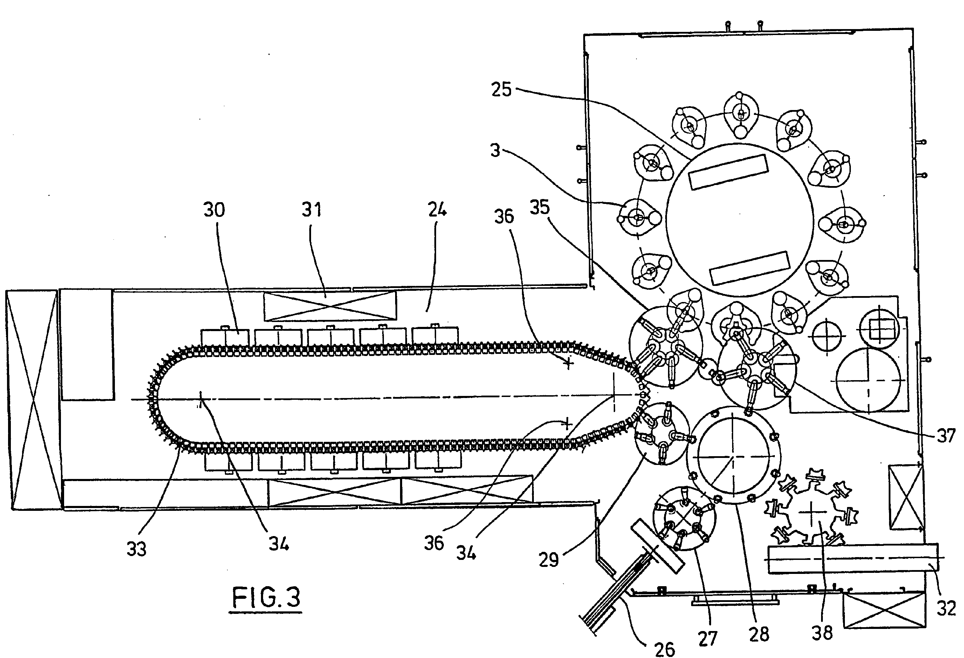

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

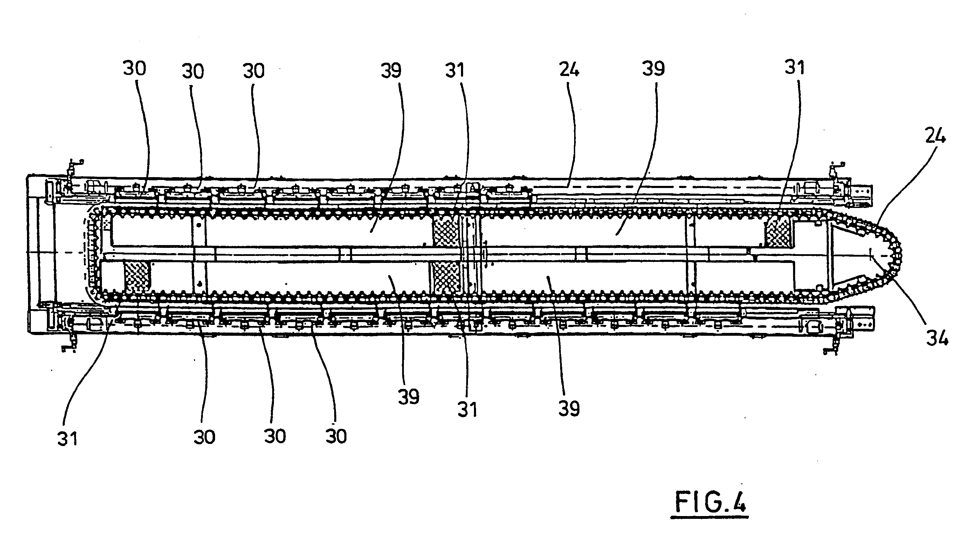

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

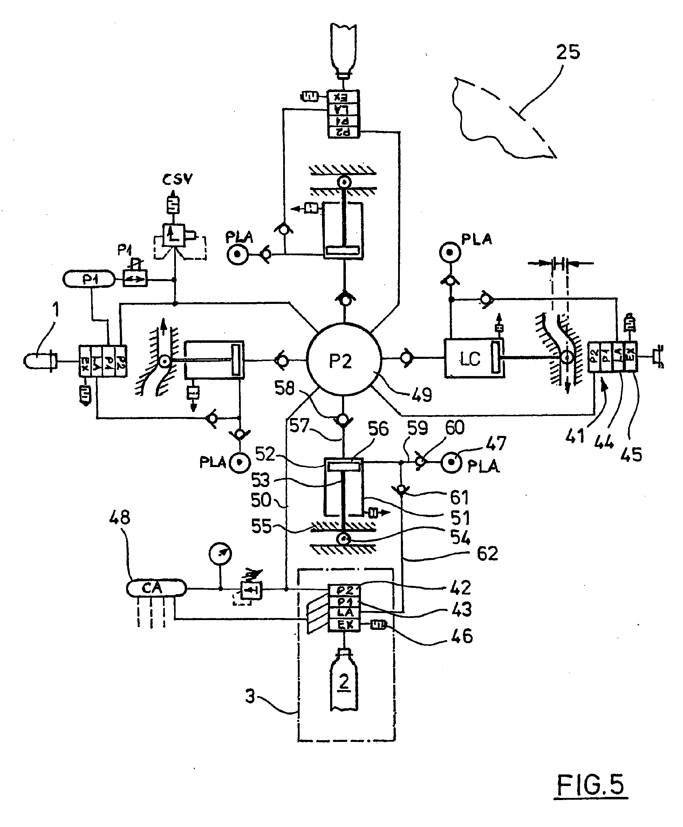

Fig. 5 zeigt schematisch eine pneumatische Versorgungseinrichtung für die Blasstationen (4). Die Blasstationen (4) sind jeweils mit einem Ventilblock (41) ausgestattet, der ein Hauptdruckventil (42), ein Vordruckventil (43), ein Transferventil (44) sowie ein Entlüftungsventil (45) aufweist, das typischerweise an einen Schalldämpfer (46) angeschlossen ist. Ein entsprechender Vordruck liegt typischerweise in einem Bereich von 5 bis 10 bar, bevorzugt von etwa 8 bar. Der Vordruck wird von einer Vordruckversorgung (47) bereitgestellt. Für eine Betätigung der Ventile (41, 42, 43, 44) ist eine Steuerdruckversorgung (48) vorgesehen, die mit einem Druck von etwa 10 bar arbeitet.

Druckgas mit einem Druckniveau, der dem Hauptblasdruck entspricht, wird im Bereich eines Vorratstanks (49) bereitgestellt. Der Vorratstank (49) ist über eine Verbindungsleitung (50) mit dem Hauptdruckventil (42) verbunden. Bei einer Durchschaltung des Hauptdruckventils (42) wird hierdurch der Hauptdruck in den Innenraum des zu expandierenden Vorformlings (1) bzw. des sich entwickelnden Behälters (2) eingeleitet.

Jeder Blasstation (3) ist beim dargestellten Ausführungsbeispiel mindestens ein Zylinder (51) zugeordnet, in dem ein Kolben (52) geführt ist. Der Kolben (50) ist über eine Kolbenstange (53) mit einer Kurvenrolle (54) verbunden. Die Kurvenrolle (54) ist entlang einer Kurvenbahn (55) geführt. Ein Zylinderinnenraum (56) ist im Bereich seiner der Kolbenstange (53) abgewandten Ausdehnung über eine Leitung (57) und ein Rückschlagventil (58) an den Vorratstank (49) angeschlossen. Das Rückschlagventil (58) ist derart angeordnet, daß eine Gasströmung nur vom Zylinderinnenraum (56) in Richtung auf den Vorratstank (49) möglich ist. Der der Leitung (57) zugewandte Bereich des Zylinderinnenraumes (56) ist darüber hinaus über eine Anschlußleitung (59) und ein Rückschlagventil (60) mit der Vordruckversorgung (47) verbunden.

Die Anschlußleitung (59) ist darüber hinaus über ein weiteres Rückschlagventil (61) und eine Leitung (62) mit dem Transferventil (44) verbunden. Das Rückschlagventil (60) ist derart geschaltet, daß eine Gasströmung nur von der Vordruckversorgung (47) in Richtung auf den Zylinderinnenraum (56) möglich ist. Das Rückschlagventil (61) ist derart geschaltet, daß eine Gasströmung nur vom Transferventil (44) in Richtung auf den Zylinderinnenraum (56) möglich ist.

Fig. 5 veranschaulicht schematisch eine Anordnung mit vier Blasstationen (3), die auf einem rotierenden Blasrad (25) angeordnet sind. Bei der in der Zeichnungsebene links dargestellten Positionierung wird ein Vorformling (1) in die zugehörige Blasstation (3) eingesetzt. In dem in Fig. 5 im rechten Zeichnungsteil dargestellten Betriebszustand der zugeordneten Blasstation (3) ist eine Druckabsenkung im bereits fertig geblasenen Behälter (2) erfolgt. Die anderen Darstellungen zeigen prozeßtechnische Zwischenpositionierungen.

Der Verfahrensablauf erfolgt wie nachfolgend stark vereinfacht geschildert. Zu einem Beginn des Blasvorganges wird der Vorformling (1) zunächst mit dem Vordruck aus der Vordruckversorgung (47) und anschließend nach einer Durchschaltung des Hauptdruckventils (42) mit dem Hauptblasdruck aus dem Vorratstank (49) versorgt. Nach einem Fertigblasen des Behälters (2) öffnet das Transferventil (44) und das unter Druck stehende Blasmedium strömt aus dem geblasenen Behälter (2) in den Zylinderinnenraum (46) hinein. Der Kolben (52) hat zu einem Beginn dieses Vorganges eine Positionierung eingenommen, die dem kleinsten Volumen desjenigen Teiles des Zylinderinnenraumes (56) entspricht, der zwischen dem Kolben (52) und dem zugeordneten Anschlußbereich der Leitung (57) eingeschlossen ist.

Die in den Zylinderinnenraum (56) einströmende Blasluft generiert einen Druck im Zylinderinnenraum (56), der von der Kurvenrolle (54) auf die Kurvenbahn (55) übertragen wird. Im Bereich dieser Bewegung des Kolbens (52) weist die Kurvenbahn (55) relativ zu einer Umfangsrichtung des Blasrades (25) eine schräge Anordnung auf, so daß von der Kurvenrolle (54) eine Kraft auf die Kurvenbahn (55) übertragen wird, deren zugeordnete Gegenkraft eine Kraftkomponente in der Bewegungsrichtung des Blasrades (25) aufweist und hierdurch zu einem Antrieb des Blasrades (25) führt. Die im geblasenen Behälter (2) gespeicherte Druckenergie des unter Druck stehenden Blasgases wird hierdurch in eine mechanische Antriebsenergie für das Blasrad (25) transformiert.

Nachdem der Kolben (55) eine Positionierung innerhalb des Zylinderinnenraumes (56) eingenommen hat, die zu einem größten erreichbaren Volumen führt, das zwischen dem Kolben (52) und dem Anschlußbereich der Leitung (57) eingeschlossen ist, erfolgt ein Verlauf der Kurvenbahn (55) derart, daß der Kolben (52) eine Rückhubbewegung durchführt und hierbei die eingeschlossene Luft wieder komprimiert. Bei einem Erreichen des Hauptblasdruckes öffnet das Rückschlagventil (58) und es wird unter Druck stehendes Gas in den Vorratstank (48) eingespeist. Die mechanische Bewegungsenergie des Blasrades (25) wird hierdurch wieder in pneumatische Druckenergie umgesetzt. Die Höhe des erreichbaren pneumatischen Druckes ist lediglich von den gewählten mechanischen konstruktiven Randbedingungen abhängig.

Im Ergebnis wird somit die bei der Expansion des Blasgases generierte mechanische Antriebsenergie dafür genutzt, während nachfolgender Prozeßphasen erneut unter Druck stehendes Gas zu generieren.

Zur zeitlich definierten Durchführung des Druckabsenkungsvorganges innerhalb des geblasenen Behälters (2) ist vorgesehen, die Energietransformation der pneumatischen Druckenergie in die mechanische Antriebsenergie lediglich bis zu einer vorgebbaren Druckschwelle durchzuführen. Die Druckschwelle kann beispielsweise bei 8 bar liegen. Bei Erreichen dieser Druckschwelle öffnet das Entlüftungsventil (45) und der im Behälter (2) befindliche Restdruck wird gegen den Umgebungsdruck entlüftet. Nach einer vollständigen Druckabsenkung auf Umgebungsdruck kann der geblasene Behälter (2) aus der Blasstation (3) entnommen werden. Das Rückschlagventil (61) sorgt dafür, daß auch bei der vollständigen Druckabsenkung im Bereich des Behälters (2) innerhalb des Zylinderinnenraumes (56) Druck entsprechend der vorgegebenen Druckschwelle aufrecht erhalten bleibt.

Aus der in der letzten Prozeßphase erfolgenden Entlüftung des Innenraumes des Behälters (2) gegen den Umgebungsdruck resultiert, daß keine vollständige Energierückführung innerhalb des pneumatisch-mechanischen Systems möglich ist. Es wird somit bei der Gasexpansion nicht so viel mechanische Antriebsenergie für das Blasrad (25) freigesetzt, wie zur Kompression einer ausreichenden Menge an Blasgas erforderlich wäre. Die entsprechende Energiedifferenz wird vom Antriebsmotor des Blasrades (25) bereitgestellt. Gegenüber einem konventionellen Blasradantrieb ist es somit erforderlich, einen stärkeren Antriebsmotor, typischerweise einen elektrischen Drehstrommotor, zu verwenden. Die Leistungssteigerung im Bereich dieses Motors führt zwar im Bereich der Blasmaschine zu einem erhöhten Energieverbrauch, es entfällt dafür jedoch der erhebliche Energieverbrauch im Bereich des ansonsten verwendeten Hochdruckkompressors.

Bei einer optimalen Systemauslegung ist zu erwarten, daß die Leistung des Blasradantriebes um etwa 20% derjenigen Leistung vergrößert werden muß, die der ansonsten erforderlichen Leistung des Hochdruckkompressors entspricht. Die resultierende Energieeinsparung liegt somit in der Größenordnung von etwa 80% der Antriebsleistung des konventionell erforderlichen Hochdruckkompressors.

Die wesentlichen Vorteile der im Ausführungsbeispiel gemäß Fig. 5 dargestellten Umwandlung der pneumatischen Druckenergie in mechanische Antriebsenergie für das Blasrad und die Ableitung der erneuten Druckgaserzeugung von der Bewegung des Blasrades (25) liegt in der äußerst kompakten Konstruktion, die nur relativ wenige Wechselwirkungen mit einer Umgebung erfordert. Alternativ sind aber auch diverse weitere Varianten zur Energierückgewinnung bzw. Transformation denkbar.

Gemäß einer Ausführungsvariante ist beispielsweise daran gedacht, die gespeicherte Druckenergie innerhalb der geblasenen Behälter (2) nicht in mechanische Antriebsenergie für das Blasrad (25) umzuwandeln, sondern unter Verwendung des Druckgases einen elektrischen Generator anzutreiben, der die Druckgasenergie in elektrische Energie transformiert. Diese elektrische Energie kann beispielsweise zur Versorgung eines separaten Kompressors verwendet werden, es ist aber ebenfalls denkbar, lediglich die Gaskompression unter Verwendung einer vom Blasrad (25) gesteuerten Zylinderanordnung vorzunehmen und einen entsprechend größer dimensionierten Antriebsmotor für das Blasrad (25) mit dem entsprechend generierten elektrischen Strom zu speisen.

Als wesentlich im Hinblick auf die erfinderische Grundidee ist anzusehen, daß unter Verwendung der im Blasgas der hergestellten Behälter (2) gespeicherten Energie unter Druck stehendes, Blasgas generiert wird, das sich wieder auf einem Druckniveau des Hauptblasdruckes befindet bzw. abgeleitetes Druckgas erneut wieder auf dieses Druckniveau anzuheben.

Die im Ausführungsbeispiel veranschaulichte Absenkung des Innendruckes im Zylinder (51) auf einen Wert zwischen dem Umgebungsdruck und dem Hauptblasdruck erweist sich als vorteilhaft, da hierdurch eine Reduzierung des Volumens des Zylinders (51) möglich ist. Das Volumen des Zylinders (51) ergibt sich aus dem zum Blasen eines Behälters (2) erforderlichen Blasgasvolumen und dem Faktor der erforderlichen Drucksteigerung im Zylinder (51) während der Kompressionsphase.

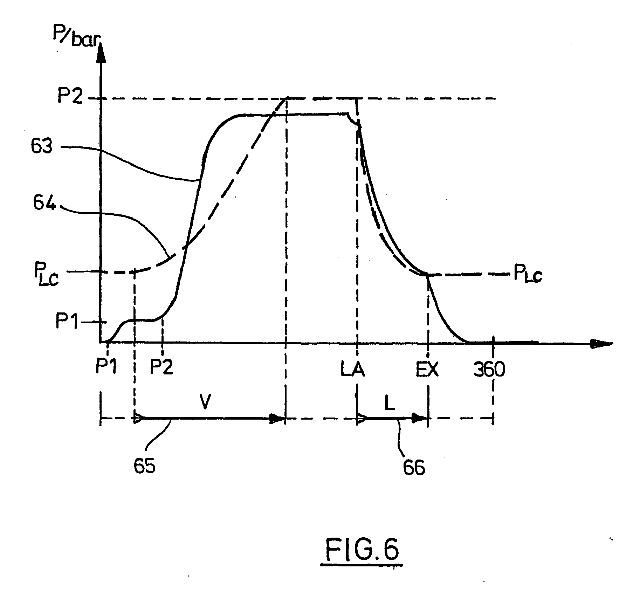

Fig. 6 zeigt einen Blasdruckverlauf (63), der sich während der Durchführung des Blasvorganges innerhalb des Behälters (2) einstellt, und einen Druckverlauf (64) innerhalb des Zylinderinnenraumes (56). Während eines Zeitraumes (65) erfolgt das Verdichten und innerhalb eines Zeitraumes (66) die Druckzuführung vom Innenraum des Behälters (2) in den Zylinderinnenraum (56) hinein. Der gesamte Prozeßablauf erstreckt sich über einen dargestellten Prozeßwinkel von 360°, der einer vollständigen Umdrehung des Blasrades (25) entspricht. Der Druck P2 entspricht einem Wert im Bereich von 30 bis 40 bar, typischerweise von etwa 32 bar. Der Druck PLC ist der Restdruck im Zylinderinnenraum (56) und beträgt etwa 8 bar.

Hinsichtlich eins Anfahrens der Blasmaschine ist daran gedacht, den Zylinderinnenraum (56) unter Verwendung der Vordruckversorgung (47) zunächst vorzuladen und dann das Blasrad (25) unter Verwendung dessen Hauptantriebes so lange ohne eine blastechnische Herstellung von Behältern (2) drehen zu lassen, bis sich der Betriebsdruck im Bereich des Vorrastanks (49) eingestellt hat. Es ist somit auch für ein Anfahren kein externer Hochdruck erforderlich. Zur Vermeidung zu hoher Betriebsenergien während dieses Anfahrvorganges kann das Blasrad (25) während dieser Ladephase mit einer zu einer üblichen Produktionsgeschwindigkeit deutlich reduzierten Umfangsgeschwindigkeit betrieben werden.

## Patentansprüche

1. Verfahren zur Blasformung von Behältern (2), bei dem ein Vorformling (1) nach einer thermischen Konditionierung innerhalb einer Blasform (4) einer Blasmaschine durch Blasdruckeinwirkung in den Behälter (2) umgeformt wird sowie bei dem Blasgas von einer Versorgungseinrichtung bereitgestellt wird, wobei mindestens ein Teil der innerhalb des geblasenen Behälters (2) gespeicherten pneumatischen Druckenergie in eine andere Energieform transformiert wird, wobei eine Umwandlung der Druckenergie in mechanische Antriebsenergie für ein Blasrad (25) der Blasmaschine durchgeführt wird, und wobei ein Teil der Antriebsenergie des Blasrades (25) unter Verwendung mindestens einer Kolben-Zylinder-Anordnung in pneumatische Druckenergie transformiert wird, die einem Vorratstank (49) zugeführt wird.

2. Verfahren nach Anspruch 1, **dadurch gekennzeichnet, daß** die Druckenergie in elektrische Energie transformiert wird.

3. Verfahren nach einem der Ansprüche 1 oder 2 , **dadurch gekennzeichnet, daß** die Druckenergie unter Verwendung mindestens einer Kolben-Zylinder-Anordnung transformiert wird.

4. Verfahren nach einem der Ansprüche 1 bis 3, **dadurch gekennzeichnet, daß** auf dem Blasrad (25) mindestens zwei Blasstationen (3) angeordnet werden.

5. Verfahren nach einem der Ansprüche 1 bis 4, **dadurch gekennzeichnet, daß** die Druckenergie durch einen Kontakt zwischen einer Kurvenrolle (54) und einer Kurvenbahn (55) in mechanische Antriebsenergie transformiert wird.

6. Verfahren nach Anspruch 5, **dadurch gekennzeichnet, daß** die Kurvenrolle (54) mit dem Blasrad (25) rotiert und die Kurvenbahn (55) ortsfest angeordnet wird.

7. Verfahren nach einem der Ansprüche 1 bis 6, **dadurch gekennzeichnet, daß** mindestens ein Teil der Energieumwandlung kurvengesteuert durchgeführt wird.

8. Verfahren nach einem der Ansprüche 1 bis 7, **dadurch gekennzeichnet, daß** eine vorgebbare Gasströmungsrichtung durch mindestens ein Rückschlagventil vorgegeben wird.

9. Vorrichtung zur Blasfonnung von Behältern, die mindestens eine Blasstation mit einer Blasform aufweist, sowie bei die Blasstation mit einer pneumatischen Versorgungseinrichtung verbunden ist, wobei die Blasstation (3) derart mit einer Transformationseinrichtung gekoppelt ist, daß mindestens ein Teil der innerhalb des geblasenen Behälters (2) gespeicherten pneumatischen Druckenergie in eine andere Energieform transformierbar ist, wobei die Transformationseinrichtung zur Erzeugung mechanischer Antriebsenergie ausgebildet ist, wobei im Bereich des Blasrades (25) mindestens eine Kolben-Zylinder-Anordnung zur Druckgaserzeugung angeordnet ist, die mit einem Vorratstank (49) für Druckluft verbunden ist.

10. Vorrichtung nach Anspruch 9, **dadurch gekennzeichnet, daß** die Transformationseinrichtung zur Erzeugung elektrischer Energie ausgebildet ist.

11. Vorrichtung nach einem der Ansprüche 9 oder 10, **dadurch gekennzeichnet, daß** die Transformationseinrichtung mindestens eine Kolben-Zylinder-Anordnung umfaßt.

12. Vorrichtung nach einem der Ansprüche 9 bis 11, **dadurch gekennzeichnet, daß** mindestens zwei Blasstationen (3) auf einem rotierenden Blasrad (25) angeordnet sind.

13. Vorrichtung nach einem der Ansprüche 9 bis 12, **dadurch gekennzeichnet, daß** die Kolben-Zylinder- Anordnung auf dem Blasrad (25) angeordnet ist und über eine Kurvenrolle (54) in eine ortsfest angeordnete Kurvenbahn (55) eingreift.

14. Vorrichtung nach einem der Ansprüche 9 bis 13, **dadurch gekennzeichnet, daß** die Transformationseinrichtung mit einer Kurvensteuerung gekoppelt ist.

15. Vorrichtung nach einem der Ansprüche 9 bis 14, **dadurch gekennzeichnet, daß** eine Leitungsführung für das Druckgas mindestens ein Rückschlagventil zur Vorgabe einer Strömungsrichtung umfaßt.

## Claims

1. A method for the blow moulding of containers (2), wherein a preform (1), after having been conditioned thermally in a blow mould (4) of a blow moulding machine, is moulded by the action of blowing pressure to form the container (2) and wherein blowing gas is provided by a supplying device, wherein at least a part of the pneumatic pressure energy that is stored in the blow moulded container (2) is transformed into a different form of energy, wherein a transformation of the pressure energy into mechanical drive energy is effected for a blow moulding wheel (25) of the blow moulding machine, and wherein a part of the drive energy of the blow moulding wheel (25) is transformed into pneumatic pressure energy which is supplied to a storage tank (49) with use being made of at least one piston-cylinder arrangement.

2. The method according to Claim 1, **characterised in that** the pressure energy is transformed into electric energy.

3. The method according to any one of Claims 1 or 2, **characterised in that** the pressure energy is transformed with use being made of at least one piston-cylinder arrangement.

4. The method according to any one of Claims 1 to 3, **characterised in that** at least two blowing stations (3) are arranged on the blow moulding wheel (25).

5. The method according to any one of Claims 1 to 4, **characterised in that** the pressure energy is transformed into mechanical drive energy by means of a contact between a cam roller (54) and a cam track (55).

6. The method according to Claim 5, **characterised in that** the cam roller (54) rotates with the blow moulding wheel (25) and the cam track (55) is arranged in a stationary manner.

7. The method according to any one of Claims 1 to 6, **characterised in that** at least a part of the energy conversion is achieved in a cam-controlled manner.

8. The method according to any one of Claims 1 to 7, **characterised in that** a specifiable gas flow direction is specified by at least one check valve.

9. An apparatus for the blow moulding of containers, comprising at least one blowing station with a blow mould and wherein the blowing station is connected to a pneumatic supplying device, wherein the blowing station (3) is coupled with a transformation device in such a manner that at least a part of the pneumatic pressure energy stored inside the blow moulded container (2) can be transformed into a different form of energy, wherein the transformation device is designed for the generation of mechanical drive energy, wherein at least one piston-cylinder arrangement for the generation of compressed gas is disposed in the vicinity of the blow moulding wheel (25), said piston-cylinder arrangement being connected to a storage tank (49) for compressed air.

10. The apparatus according to Claim 9, **characterised in that** the transformation device is designed for the generation of electrical energy.

11. The apparatus according to any one of Claims 9 or 10, **characterised in that** the transformation device comprises at least one piston-cylinder arrangement.

12. The apparatus according to any one of Claims 9 to 11, **characterised in that** at least two blowing stations (3) are arranged on a rotating blow moulding wheel (25).

13. The apparatus according to any one of Claims 9 to 12, **characterised in that** the piston-cylinder arrangement is disposed on the blow moulding wheel (25) and engages a cam track (55) via a cam roller (54), said cam track (55) being arranged in a stationary manner.

14. The apparatus according to any one of Claims 9 to 13, **characterised in that** the transformation device is coupled with a cam controller.

15. The apparatus according to any one of Claims 9 to 14, **characterised in that** a line run for the compressed gas comprises at least one check valve for specifying a flow direction.

## Revendications

1. Procédé de moulage par soufflage de récipients (2) dans le cadre duquel une préforme (1), après un conditionnement thermique à l'intérieur d'un moule de soufflage (4) d'une machine de moulage par soufflage, est transformée en récipient (2) sous l'action d'une pression de soufflage et dans le cadre duquel un gaz de soufflage est mis à disposition par un dispositif d'alimentation, une partie au moins de l'énergie de pression pneumatique accumulée dans le récipient (2) moulé par soufflage étant transformée en une autre forme d'énergie, l'énergie de pression étant transformée en énergie mécanique d'entraînement d'une roue de soufflage (25) de la machine de moulage par soufflage et une partie de l'énergie d'entraînement de la roue de soufflage (25) étant transformée en utilisant au moins un dispositif à piston et cylindre en énergie de pression pneumatique accumulée dans un réservoir (49).

2. Procédé selon la revendication 1, **caractérisé en ce que** l'énergie de pression est transformée en énergie électrique.

3. Procédé selon l'une des revendications 1 ou 2, **caractérisé en ce que** l'énergie de pression est transformée en utilisant au moins un dispositif à cylindre et piston.

4. Procédé selon l'une des revendications 1 à 3, **caractérisé en ce qu'**au moins deux stations de soufflage (3) sont agencées sur la roue de soufflage (25).

5. Procédé selon l'une des revendications 1 à 4, **caractérisé en ce que** l'énergie de pression est transformée en énergie mécanique d'entraînement par un contact entre un galet de came (54) et une piste de came (55).

6. Procédé selon la revendication 5, **caractérisé en ce que** le galet de came (54) tourne avec la roue de soufflage (25) et que la piste de came (55) est stationnaire.

7. Procédé selon l'une des revendications 1 à 6, **caractérisé en ce que** la transformation de l'énergie est en partie au moins commandée par came.

8. Procédé selon l'une des revendications 1 à 7, **caractérisé en ce qu'**un sens d'écoulement de gaz pouvant être fixé est prédéfini par au moins un clapet antiretour.

9. Dispositif de moulage par soufflage de récipients présentant au moins une station de soufflage avec un moule de soufflage et dont la station de soufflage est reliée à un dispositif d'alimentation pneumatique, la station de soufflage (3) étant couplée à un dispositif de transformation de façon telle qu'une partie au moins de l'énergie de pression pneumatique accumulée dans le récipient (2) moulé par soufflage peut être transformée en une autre forme d'énergie, le dispositif de transformation étant conçu pour produire de l'énergie mécanique d'entraînement et au moins un dispositif à cylindre et piston destiné à produire du gaz sous pression étant agencé dans la zone de la roue de soufflage (25) et relié à un réservoir à air comprimé (49).

10. Dispositif selon la revendication 9, **caractérisé en ce que** le dispositif de transformation est conçu pour produire de l'énergie électrique.

11. Dispositif selon l'une des revendications 9 ou 10, **caractérisé en ce que** le dispositif de transformation présente au moins un dispositif à cylindre et piston.

12. Dispositif selon l'une des revendications 9 à 11, **caractérisé en ce qu'**au moins deux stations de soufflage (3) sont agencées sur une roue de soufflage (25) en rotation.

13. Dispositif selon l'une des revendications 9 à 12, **caractérisé en ce que** le dispositif à cylindre et piston est agencé sur la roue de soufflage (25) et est en prise avec une piste de came (55) stationnaire par l'intermédiaire d'un galet de came (54).

14. Dispositif selon l'une des revendications 9 à 13, **caractérisé en ce que** le dispositif de transformation est couplé à une commande à came.

15. Dispositif selon l'une des revendications 9 à 14, **caractérisé en ce qu'**une conduite pour le gaz sous pression comporte au moins un clapet antiretour permettant de prédéfinir le sens d'écoulement du gaz.
